# EUROPÄISCHE PATENTANMELDUNG

(11) **EP 1 113 384 A2**
(43) Veröffentlichungstag der Anmeldung: **04.07.2001**
(21) Anmeldenummer: 00250439.7
(22) Anmeldetag: 16.12.2000
(51) Int. Cl.: G06K 11/18

(54) **Mousepad**

(30) Priorität: 17.12.1999 DE 19963255
(71) Anmelder: Durable Hunke & Jochheim GmbH & Co. KG., 58636 Iserlohn (DE)
(72) Erfinder: Maier-Hunke, Horst-Werner, 58640 Iserlohn (DE)
(74) Vertreter: Böning, Manfred, Prof.Dr.-Ing.

(57) **Zusammenfassung**

Die Erfindung betrifft ein Mousepad mit einem aus elastischem Polyurethanschaum gebildeten Grundkörper (1), der zwei Abschnitte aufweist, von denen der eine mit einer flachen Vertiefung (4) zur Aufnahme einer die Arbeitsfläche für die Maus bildenden Kunststoffolie (5) versehen ist und von denen der andere eine vor dem Arbeitsbereich (3) der Maus angeordnete Handgelenkauflage (2) bildet.

Um die Handgelenkauflage in einer ergonomisch sinnvollen Weise auszubilden und auf den Arbeitsbereich der Maus abzustimmen, ist erfindungsgemäß vorgesehen, daß die Handgelenkauflage (2) eine zentrale Mulde (6) bildet, die kontinuierlich in seitliche Ausleger (7, 8) übergeht, die, in der Draufsicht betrachtet, zusammen mit der Mulde (6) die Kontur eines Fischschwanzes haben, während die im Arbeitsbereich (3) angeordnete Vertiefung (4) eine sich zum Zentrum der Mulde (6) verjüngende Kontur aufweist.

## Beschreibung

Die Erfindung betrifft ein Mousepad mit einem aus elastischem Polyurethanschaum gebildeten Grundkörper, der zwei Abschnitte aufweist, von denen der eine mit einer flachen Vertiefung zur Aufnahme einer die Arbeitsfläche für die Maus bildenden Kunststoffolie versehen ist und von denen der andere eine vor dem Arbeitsbereich der Maus angeordnete Handgelenkauflage bildet.

Ein Mousepad der vorstehenden Art ist aus der US 5 562 270 A bekannt. Das bekannte Mousepad erweist sich aufgrund des zur Herstellung seines Grundkörpers verwendeten Materials an sich sowohl in fertigungstechnischer Hinsicht als auch bezüglich seiner Hautfreundlichkeit als besonders günstig. Wenn das bekannte Mousepad gleichwohl nicht voll zu befriedigen vermag, so deshalb, weil die von Haus aus im wesentlichen teilzylindrische Stützfläche der Handgelenkauflage so weich ist, daß sie sich unter der Einwirkung des sich auf ihr abstützenden Handgelenks mehr oder weniger stark verformt.

Eine verbesserte Führung und Abstützung des Handgelenks bietet ein aus der US 5 765 790 A bekanntes, über den knienahen Teil des Oberschenkels der Bedienungsperson stülpbares Mousepad, bei dem die Handgelenkauflage eine zentrale Mulde aufweist, deren Stützfläche einen im wesentlichen durchgehend halbelliptischen Querschnitt besitzt, und bei dem sich an die Handgelenkauflage eine rechteckige Arbeitsfläche für die Maus anschließt. Bei diesem Mousepad ist das Handgelenk zwar gut positioniert, es fehlt jedoch eine ergonomisch befriedigende Abstimmung der Form der Arbeitsfläche für die Maus auf die die Handgelenkposition bestimmende Muldenform.

Eine Handgelenkauflage mit einer kontinuierlich vom Zentrum einer Mulde nach außen ansteigenden Stützfläche ist auch aus der DE 297 21 510 U1 bekannt. Bei diesem Mousepad besteht die Handgelenkauflage aus einem zylindrischen Körper mit einer gekrümmten Stützfläche, deren Länge vom Zentrum der Mulde zu den Enden der Mulde kontinuierlich abnimmt. Die Arbeitsfläche für die Maus ist in diesem Fall im wesentlichen quadratisch ausgebildet. Die Form der Stützfläche der Handgelenkauflage dieses Mousepads schränkt die Beweglichkeit des Handgelenkes stark ein, indem sie gewissermaßen eine Führungsrinne für das Handgelenk bildet. Um diese unerwünschte Einschränkung der Beweglichkeit zu kompensieren, bildet die bekannte Handgelenkauflage nicht ein Stück mit dem die Arbeitsfläche für die Maus bildenden Grundkörper des Mousepads, sondern sie ist auf einem nach Art eines auf einem Kreuzschlitten gelagerten Drehtellers ausgebildet. Es versteht sich, daß die bekannte Konstruktion außerordentlich aufwendig ist und daß sie sich nur schwer mit dem Massenartikelcharakter von Mousepads in Einklang bringen läßt.

Der Erfindung liegt die Aufgabe zugrunde, ein Mousepad zu schaffen, bei dem die Handgelenkauflage in einer ergonomisch sinnvollen Weise ausgebildet und auf den Arbeitsbereich der Maus abgestimmt ist. Diese Aufgabe wird bei einem Mousepad der in Betracht gezogenen Gattung erfindungsgemäß dadurch gelöst, daß die Handgelenkauflage eine zentrale Mulde bildet, die kontinuierlich in seitliche Ausleger übergeht, die, in der Draufsicht betrachtet, zusammen mit der Mulde die Kontur eines Fischschwanzes haben, während die im Arbeitsbereich angeordnete Vertiefung eine sich zum Zentrum der Mulde verjüngende Kontur aufweist.

Aufgrund der beanspruchten Ausbildung des Mousepads wird das armseitige Ende des Handgelenkes nicht nur angenehm abgestützt, sondern aufgrund der fischschwanzförmigen Ausbildung der Ausleger das dem Handgelenk zugewandte Armende bei Schwenkbewegungen wieder in seine Ausgangsposition zurückgeleitet. Das Muldenzentrum bildet gewissermaßen einen Schwenkpunkt für das Handgelenk und erleichtert so Schwenkbewegungen der die Maus führenden Hand, wobei die Arbeitsfläche für die Maus aufgrund ihrer sich zum Zentrum der Mulde verjüngenden Kontur an den Schwenkradius der Hand bzw. der Maus angepaßt ist.

Weitere Merkmale und Einzelheiten der Erfindung ergeben sich aus den Unteransprüchen und der nachstehenden Beschreibung einer in der beigefügten Zeichnung dargestellten, besonders vorteilhaften Ausführungsform der Erfindung. Es zeigen:

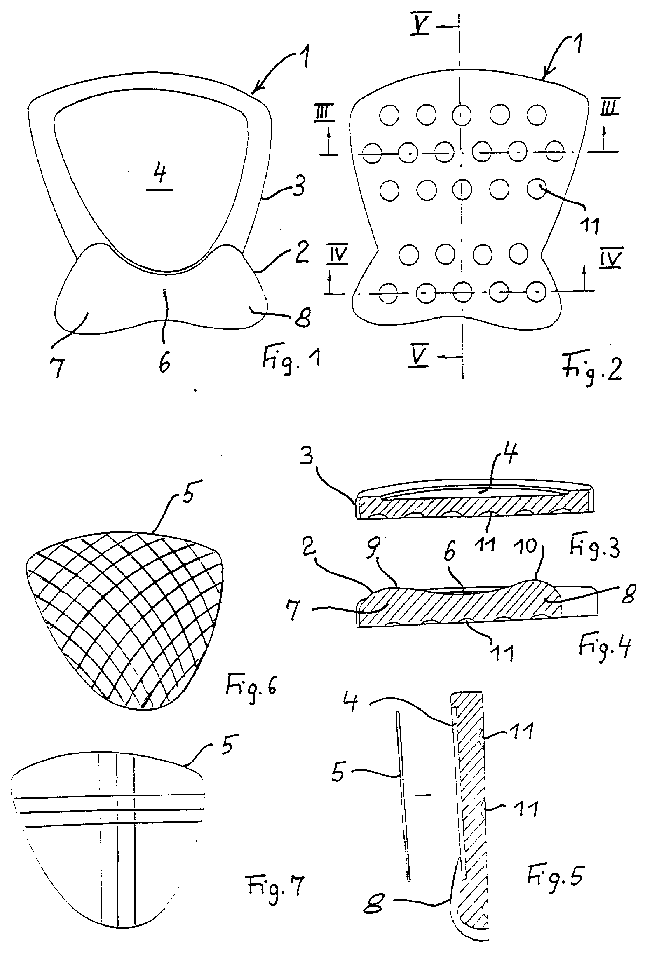

- Fig. 1: die Draufsicht auf die Oberseite eines Mousepads,
- Fig. 2: die Draufsicht auf die Unterseite des Mousepads gemäß Fig. 1,
- Fig. 3: einen Schnitt längs der Linie III-III in Fig. 2,
- Fig. 4: einen Schnitt längs der Linie IV-IV in Fig. 2,
- Fig. 5: einen Schnitt längs der Linie V-V in Fig. 2 und die Seitenansicht einer Folie,
- Fig. 6: die Draufsicht auf die Oberseite der in Fig. 5 gezeigten, zur Aufnahme in eine Vertiefung des Mousepads bestimmten Folie und
- Fig. 7: die Draufsicht auf eine modifizierte Folie.

Das in den Figuren gezeigt Mousepad besitzt einen einstükkigen Grundkörper 1, der aus einem elastischen Polyurethanschaum mit glatter Oberfläche besteht. Der Grundkörper 1 verfügt über zwei Abschnitte, von denen der eine die Handgelenkauflage 2 und der andere den Arbeitsbereich 3 für die Maus bildet. Der den Arbeitsbereich 3 für die Maus bildende Abschnitt weist eine flache Vertiefung 4 zur Aufnahme einer die Arbeitsfläche für die Maus bildenden Kunststoffolie 5 auf, die als Mehrschichtfolie ausgebildet ist, wobei eine der äußeren Schichten an ihrer Innenseite unterschiedlich bedruckt sein kann, während sie an ihrer Außenseite mit einer Mikrostruktur versehen ist, die ein leichtes Abrollen der Maus fördert.

Die Handgelenkauflage 2 ist mit einer zentralen Mulde 6 versehen, an die sich seitliche Ausleger 7 und 8 anschließen, die der Auflage 2 - in der Draufsicht betrachtet - zusammen mit der Mulde 6 eine fischschwanzartige Kontur geben. Die Mulde 6 und die sie begrenzenden, kontinuierlich bis zu den Scheitelpunkten 9, 10 ansteigenden Ausleger 7, 8 halten das Handgelenk in einer gegenüber dem von der Vertiefung 4 definierten Arbeitsbereich des Mousepads optimalen Position.

An der Unterseite des Grundkörpers befinden sich kuppelförmige Ausnehmungen 11, die unter Ausnutzung der Elastizität des Grundkörpers als eine Art Saugnäpfe nutzbar sind, die einem ungewollten Verschieben des Mousepads gegenüber seiner Auflagefläche entgegenwirken.

## Patentansprüche

1. Mousepad mit einem aus elastischem Polyurethanschaum gebildeten Grundkörper, der zwei Abschnitte aufweist, von denen der eine mit einer flachen Vertiefung zur Aufnahme einer die Arbeitsfläche für die Maus bildenden Kunststofffolie versehen ist und von denen der andere eine vor dem Arbeitsbereich der Maus angeordnete Handgelenkauflage bildet, **dadurch gekennzeichnet**, daß die Handgelenkauflage (2) eine zentrale Mulde (6) bildet, die kontinuierlich in seitliche Ausleger (7, 8) übergeht, die, in der Draufsicht betrachtet, zusammen mit der Mulde (6) die Kontur eines Fischschwanzes haben, während die im Arbeitsbereich angeordnete Vertiefung (4) eine sich zum Zentrum der Mulde (6) verjüngende Kontur aufweist.

2. Mousepad nach Anspruch 1, **dadurch gekennzeichnet**, daß die Kunststoffolie (5) in der Vertiefung (4) eingeklebt und als innenseitig bedruckte, außen eine Mikrostruktur aufweisende Mehrschichtfolie ausgebildet ist, während der Grundkörper (1) selbst eine glatte Außenfläche aufweist.

3. Mousepad nach Anspruch 2, **dadurch gekennzeichnet**, daß an der Unterseite des Grundkörpers (1) die Haftung zwischen diesem und seiner Auflagefläche erhöhende Ausnehmungen (11) angeordnet sind.

4. Mousepad nach Anspruch 3, **dadurch gekennzeichnet**, daß die flache Vertiefung (4) zur Aufnahme einer die Arbeitsfläche für die Maus bildenden Kunststoffolie (5) dient.

5. Mousepad nach Anspruch 4, **dadurch gekennzeichnet**, daß die Kunststoffolie (5) als innenseitig bedruckte, außen eine Mikrostruktur aufweisende Mehrschichtfolie ausgebildet ist.

6. Mousepad nach Anspruch 4 oder 5, **dadurch gekennzeichnet**, daß die Kunststoffolie (5) durch einen Kleber mit dem Boden der Vertiefung (4) verbunden ist.

7. Mousepad nach einem der Ansprüche 3 bis 6, **dadurch gekennzeichnet**, daß an der Unterseite des Grundkörpers (1) die Haftung zwischen diesem und seiner Auflagefläche erhöhende Ausnehmungen (11) angeordnet sind.
